# EUROPÄISCHE PATENTSCHRIFT

(11) **EP 1 232 916 B1**
(45) Veröffentlichungstag und Bekanntmachung des Hinweises auf die Patenterteilung: **23.03.2005**
(21) Anmeldenummer: 02001019.5
(22) Anmeldetag: 17.01.2002
(51) Int. Cl.: B60R 22/195

(54) **Gurtstraffer**
Safety belt pretensioner
Prétensionneur de ceinture de sécurité

(30) Priorität: 16.02.2001 DE 20102758 U
(43) Veröffentlichungstag der Anmeldung: 21.08.2002
(73) Patentinhaber: TRW Automotive GmbH, 73553 Alfdorf (DE)
(72) Erfinder: Betz, Hans-Peter, 73560 Böbingen (DE); Hönl, Wolf-Dieter, 73560 Böbingen (DE)
(74) Vertreter: Sties, Jochen, Dipl.-Ing.

(56) Entgegenhaltungen:
- DE-A- 2 349 891
- DE-A- 2 411 702
- US-A- 5 340 152
- US-A- 6 024 383

## Beschreibung

Die Erfindung betrifft einen Straffer für einen Sicherheitsgurt, mit einem Zylinder, einem Kolben, der in dem Zylinder verschiebbar angeordnet ist, einem Zugübertragungsmittel, das mit dem Kolben verbunden ist, um die Bewegung des Kolbens auf den Sicherheitsgurt zu übertragen, und einem Antrieb, der auf den Kolben eine Antriebskraft ausüben kann, um den Sicherheitsgurt zu straffen.

Derartige Gurtstraffer dienen dazu, im Auslösefall eine eventuell vorhandene Gurtlose schnell einzuziehen, damit der Sicherheitsgurt seine Schutzwirkung für den Insassen voll entfalten kann. Um die Belastung für den Fahrzeuginsassen im Rückhaltefall möglichst gering zu halten, muß die Sicherheitsgurteinrichtung möglichst viel der kinetischen Energie des Fahrzeuginsassen aufnehmen können. Dazu sind sogenannte Kraftbegrenzer vorgesehen, die die aufgenommene Energie in plastische Verformung umwandeln. Ein derartiger Kraftbegrenzer ist beispielsweise bei dem in der DE-U-297 18 661 beschriebenen Gurtstraffer verwirklicht. Hier ist der Kolben des Gurtstraffers konisch ausgebildet, so daß er beim Zurückziehen des Kolbens durch das Zugübertragungsmittel Wälzkörper gegen die Zylinderwand drückt, welche dieselbe plastisch verformen, wenn der Kolben auf dem vorher zurückgelegten Straffweg zurückgezogen wird. Allerdings kann diese Art der Kraftbegrenzung nur dann funktionieren, wenn der Gurtstraffer auch ausgelöst und der Kolben aus seiner Ruhelage verschoben wurde, so daß eine Wegstrecke zur Verformung der Zylinderwand zur Verfügung steht. Falls bei der Auslösung keine Gurtlose vorlag oder falls der Gurtstraffer gar nicht ausgelöst wurde und sich der Kolben somit noch in der Ruhestellung befindet, bleibt diese Einrichtung zur Kraftbegrenzung wirkungslos.

Aus der US-A-6 024 383 ist ein gattungsgemäßer Gurtstraffer mit einem Kolben bekannt, der mit einem Kolbenelement versehen ist, an welchem das Zugübertragungsmittel angreift. Das Kolbenelement weist Rollen und Rampenflächen auf, um zur Erzielung einer Kraftbegrenzung nach einer Gurtstraffung die Wand des Zylinders zu deformieren, in dem der Kolben verschiebbar angeordnet ist.

Aufgabe der Erfindung ist es daher, einen Gurtstraffer zu schaffen, der auch im nicht ausgelösten Zustand eine Kraftbegrenzung bietet, und bei dem der Straffweg und der für eine Kraftbegrenzung nutzbare Weg unabhängig sind.

Diese Aufgabe wird durch einen Straffer der eingangs genannten Art gelöst, bei dem der Kolben mit einer Deformationseinrichtung versehen ist, die ein verformbares Element und ein verformendes Element aufweist, an welchem das Zugübertragungsmittel angreift. Die Deformationseinrichtung die auch als Deformationselement bezeichnet werden kann, dient einerseits der Verbindung zwischen Kolben und Zugübertragungsmittel, kann aber andererseits durch eine auf das Zugübertragungsmittel wirkende Kraft plastisch verformt werden, so daß es als Kraftbegrenzungseinrichtung wirkt. Diese Funktion kann die Deformationseinrichtung unabhängig von der Stellung des Kolbens erfüllen, so daß die Kraftbegrenzungsfunktion auch bei nicht ausgelöstem Gurtstraffer gewährleistet ist.

Weitere vorteilhafte Ausgestaltungen der Erfindung ergeben sich aus den Unteransprüchen.

Die Erfindung wird nachfolgend anhand einer bevorzugten Ausführungsform ausführlich beschrieben. Dabei wird Bezug genommen auf die beigefiigten Zeichnungen, in welchen zeigt:
- Figur 1 einen Querschnitt durch einen erfindungsgemäßen Straffer;
- Figur 2 eine teilweise geschnittene Ansicht des Straffers aus Figur 1 im nicht ausgelösten Zustand;
- Figur 3 eine teilweise geschnittene Ansicht des Straffers aus Figur 1 im ausgelösten Zustand;
- Figur 4 eine teilweise geschnittene Ansicht des Straffers aus Figur 1 im ausgelösten Zustand nach einem Rückhaltefall;
- Figur 5 eine teilweise geschnittene Ansicht des Straffers aus Figur 1 im nicht ausgelösten Zustand; und
- Figur 6 eine teilweise geschnittene Ansicht des Straffers aus Figur 1 im nicht ausgelösten Zustand nach einem Rückhaltefall.

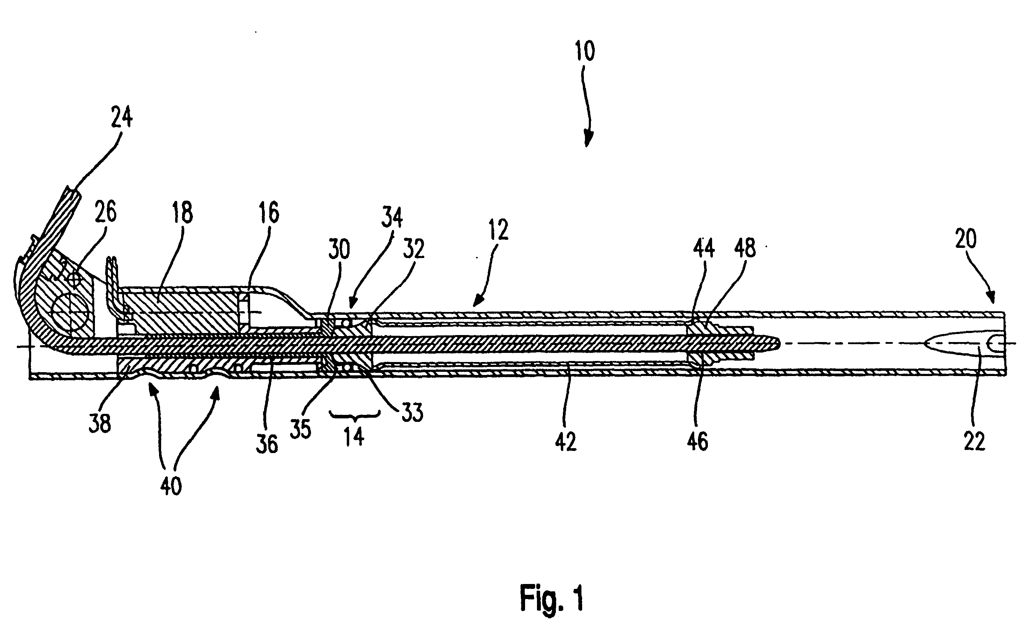

Der in Figur 1 dargestellte Gurtstraffer 10 weist einen Zylinder 12 auf, in dem ein Kolben 14 verschiebbar angeordnet ist. Der Zylinder 12 hat ein Antriebsende 16, an dem sein Querschnitt erweitert ist, um einen Antrieb in Form eines Gasgenerators 18 aufzunehmen. Das gegenüberliegende offene Ende 20 des Zylinders 12 ist durch eine Einbuchtung 22 verjüngt, um ein Austreten des Kolbens 14 zu verhindern. Ein Zugübertragungsmittel in Form eines Stahlseiles 24 erstreckt sich entlang der Längsachse des Zylinders 12 durch eine Bohrung im Kolben 14. Am Antriebsende 16 des Zylinders ist das Zugseil 24 um ein Umlenkelement 26 geführt und tritt aus dem Zylinder 12 aus. Das umgelenkte Ende des Zugseils 24 kann mit einem nicht dargestellten Gurtangriffsmittel, beispielsweise einem Gurtschloß oder einem Gurtumlenker, verbunden sein, welches wiederum an einem Sicherheitsgurt angreift.

Der Kolben 14 besteht aus einem Antriebsstempel 30, der zum Generator 18 weist, und einem Konus 32, dessen Ende kleineren Durchmessers an den Antriebsstempel 30 grenzt. Der Antriebsstempel 30 dichtet gleitfähig gegen die Wand des Zylinders 12 ab, so daß der Kolben 14 durch die vom Generator 18 gebildeten Gase zum freien Ende 20 verschoben werden kann. In einem Hohlraum 33 zwischen dem Konus 32 und dem Zylinder 12 befinden sich Wälzkörper 34, die zwischen dem Kolben und der Innenwand des Zylinders 12 eingeklemmt werden können. Die Wälzkörper 34 sind von Fingern 35 geführt, die vom Antriebsstempel 30 in den Hohlraum 33 ragen. Auf diese Weise ist der Kolben 14 mit einer Rücklaufsperre versehen, die verhindert, daß der Kolben nach dem Straffvorgang in seine Ausgangsstellung zurückkehrt. Indem nämlich der Konus 32 die Wälzkörper 34 gegen die Innenwand des Zylinders 12 drückt, verklemmt sich der Kolben 14 im Zylinder 12. An das freie Ende des Antriebsstempels 30 schließt sich eine Schutzhülse 36 an, die das Seil 24 vor den heißen Verbrennungsgasen des Generators 18 schützt. Ein Dichtelement 38 ist mit dem Zylinder 12 verpreßt (siehe Preßstellen 40 in Figur 1) und dichtet den Innenraum des Zylinders am Generatorende 16 ab.

Ein Deformationsrohr 42 ist an einem ersten Ende mit dem Konus 32 des Kolbens 14 verbunden. Das zweite Ende des Deformationsrohres 42 weist zum freien Ende 20 des Zylinders 12 und ist mit einer Erweiterung 44 versehen. Durch das Deformationsrohr 42 erstreckt sich das Zugseil 24, wobei ein im wesentlichen zylindrisches Verdrängerteil 46 auf das aus dem Deformationsrohr 42 ragende freie Ende des Zugseils 24 gepreßt ist. Das Verdrängerteil 46 ist mit einer bezüglich dessen Längsachse symmetrischen, vorteilhafterweise kugelförmigen Verdickung 48 versehen, deren Durchmesser etwas größer ist als der Innendurchmesser des Deformationsrohres 42. Mit der Verdickung 48 greift das Verdrängerteil 46 an der Erweiterung 44 des Deformationsrohres 42 an, wobei das Verdrängerteil am Ende des Deformationsrohres 42 durch die symmetrische Form der Verdickung 48 zentriert ist.

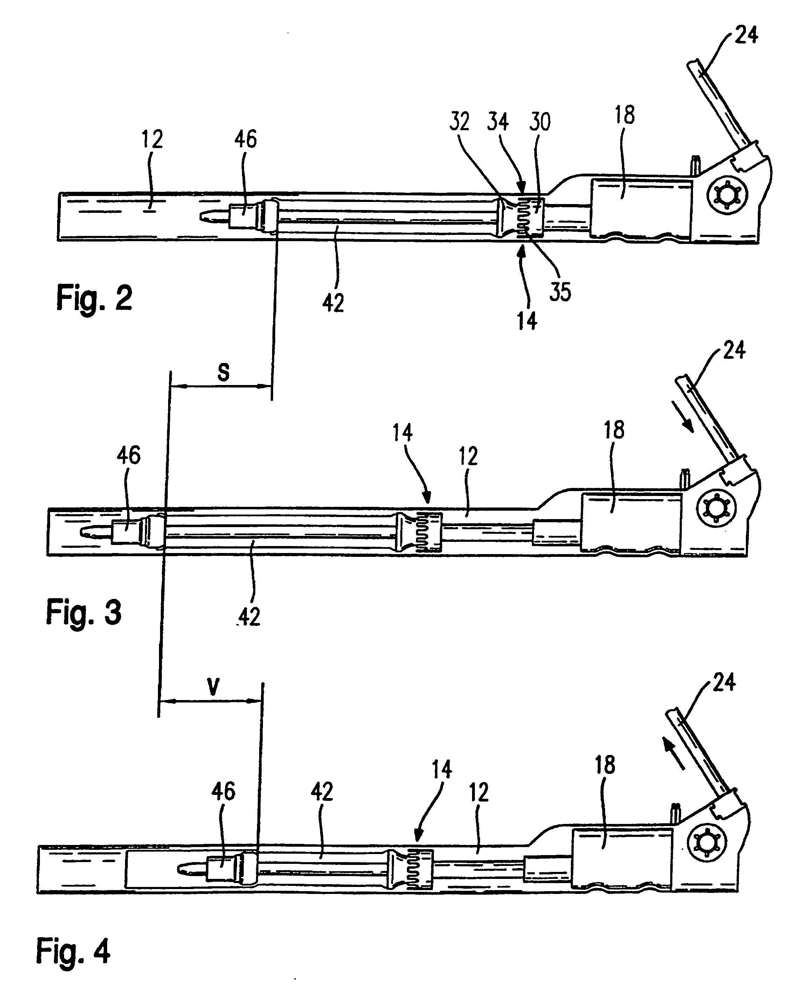

Bei der Auslösung des Gurtstraffers 10 wird der Kolben 14 durch die expandierenden Verbrennungsgase des Gasgenerators 18 zum freien Ende 20 des Zylinders hin um einen Straffweg S verschoben (Figur 3). Dabei übt der Kolben 14 über den Konus 32, das Deformationsrohr 42 und das Verdrängerteil 46 eine Zugkraft auf das Zugseil 24 aus, welches über das Gurtangriffsmittel, den Sicherheitsgurt straffen kann. Im anschließenden Rückhaltefall erfährt das Seil 24 infolge der kinetische Energie des Fahrzeuginsassen eine Zugkraft, welche je nachdem, wie stark das Fahrzeug verzögert wird, die beim Straffvorgang vom Generator 18 aufgebrachte Antriebskraft übersteigen kann. In diesem Fall bewirkt die von der Verzögerung hervorgerufene Zugkraft, daß das Verdrängerteil 46 unter plastischer Verformung des Deformationsrohres 42 in dieses eindringt (Figur 4) und darin den Verformungsweg V zurücklegt, der vom Straffweg S völlig unabhängig ist. Dabei verhindert die Rücklaufsperre im Kolben 14, daß dieser zurückgezogen wird. Das Eindringen des Verdrängerteils 46 ermöglicht das Nachgeben des Zugseils 24 und somit eine effektive Kraftbegrenzung der Rückhaltekraft auf den Fahrzeuginsassen.

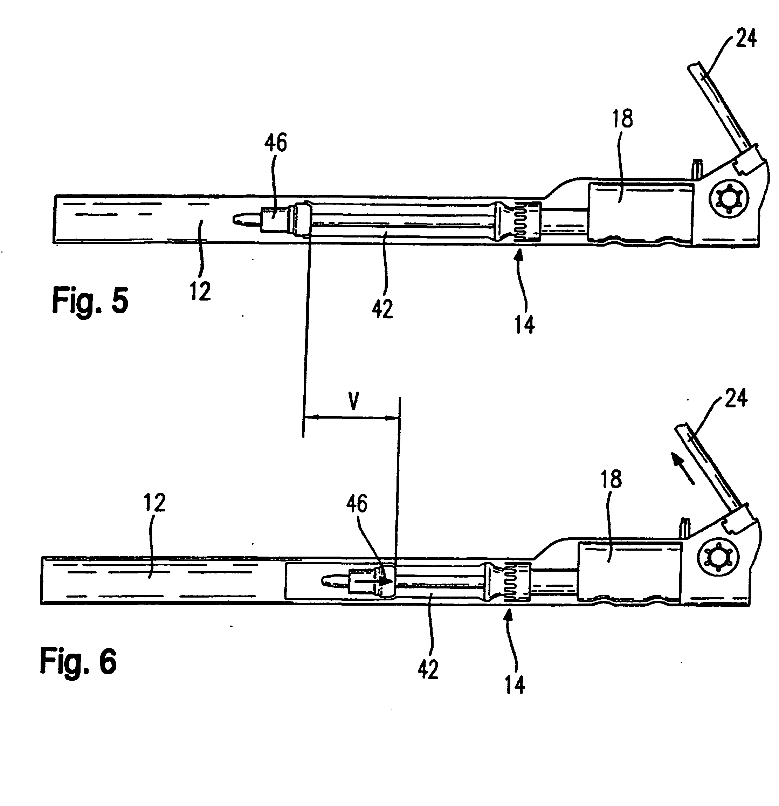

Die Kraftbegrenzung durch das Eindringen des Verdrängerteils 46 in das Deformationsrohr 42 wirkt auch, wie in den Figuren 5 und 6 dargestellt ist, bei nicht ausgelöstem Gurtstraffer 10, d.h. wenn sich der Kolben 14 noch in der Ausgangsposition (wie in Figur 2) befindet. Auch in diesem Fall kann der volle Verformungsweg V zurücklegt werden.

Damit bietet der erfindungsgemäße Gurtstraffer sowohl nach der Auslösung eines Straffvorgangs, als auch im nicht ausgelösten Zustand eine Kraftbegrenzung, für die ein Verformungsweg V zur Verfügung steht, der von der Endposition des Kolbens 14 unabhängig ist. Der Verformungsweg wird also auch nicht durch einen eventuell zurückgelegten Straffweg begrenzt.

Durch die Anordnung des Deformationsrohres 42 im Zylinder 12 ist eine sehr platzsparende Bauweise des Gurtstraffers möglich, die kaum mehr Raum erfordert als ein herkömmliches System. Die erfindungsgemäße Gestaltung ermöglicht daher auch die kostengünstige Verwendung bereits bekannter Bauteile, beispielsweise für den Antrieb. Gegenüber einem herkömmlichen Gurtstraffer sind nur wenige zusätzliche Bauteile erforderlich.

Selbstverständlich ist die Erfindung nicht auf die dargestellte Ausgestaltung, insbesondere des Deformationsrohres und des Verdrängerteils, beschränkt. Wesentlich ist, daß die Deformationseinrichtung so stabil ist, daß sie der Antriebskraft des Antriebs beim Straffvorgang standhält, aber durch die Rückhaltekraft verformt werden kann.

## Patentansprüche

1. Straffer (10) für einen Sicherheitsgurt, mit einem Zylinder (12), einem Kolben (14), der in dem Zylinder verschiebbar angeordnet ist, einem Zugübertragungsmittel (24), das mit dem Kolben verbunden ist, um die Bewegung des Kolbens auf den Sicherheitsgurt zu übertragen, und einem Antrieb (18), der auf den Kolben eine Antriebskraft ausüben kann, um den Sicherheitsgurt zu straffen, **dadurch gekennzeichnet, daß** der Kolben (14) mit einer Deformationseinrichtung (42, 46) versehen ist, die ein verformbares Element (42) und ein verformendes Element (46) aufweist, an welchem das Zugübertragungsmittel (24) angreift.

2. Straffer nach Anspruch 1, **dadurch gekennzeichnet, daß** das verformbare Element ein Deformationsrohr (42), das mit dem Kolben (14) verbunden ist, und das verformende Element ein Verdrängerteil (46) ist, das mit dem Zugübertragungsmittel (24) verbunden ist und unter plastischer Verformung des Deformationsrohres in dieses eindringen kann.

3. Straffer nach einem der vorhergehenden Ansprüche, **dadurch gekennzeichnet, daß** das Deformationsrohr (42) ein erstes Ende, mit dem es am Kolben (14) befestigt ist, und ein zweites Ende mit einer Erweiterung (44) aufweist, wobei im unverformten Zustand das Verdrängerteil (46) an der Erweiterung (44) angreift.

4. Straffer nach einem der vorhergehenden Ansprüche, **dadurch gekennzeichnet, daß** der Kolben (14) mit einer Rücklaufsperre (34) versehen ist, die verhindert, daß der Kolben nach dem Straffvorgang wieder in seine Ruhestellung verschoben werden kann.

5. Straffer nach Anspruch 4, **dadurch gekennzeichnet, daß** die Rücklaufsperre mehrere Blockierelemente (34) enthält, die zwischen dem Kolben (14) und der Innenwand des Zylinders (12) eingeklemmt werden können.

6. Straffer nach einem der vorhergehenden Ansprüche, **dadurch gekennzeichnet, daß** sich das Zugübertragungsmittel (24) durch das Deformationsrohr (42) und durch eine Bohrung im Kolben (14) erstreckt.

7. Straffer nach einem der vorhergehenden Ansprüche, **dadurch gekennzeichnet, daß** das Zugübertragungsmittel (24) ein Zugseil ist.

## Claims

1. A tensioner (10) for a safety belt, comprising a cylinder (12), a piston (14) which is slidably arranged within the cylinder, a traction transfer means (24) which is connected with the piston to transfer the movement of the piston to the safety belt, and a drive (18) which may exert a driving force on the piston to tension the safety belt, **characterized in that** the piston (14) is provided with a deformation means (42, 46) having a deformable element (42) and a deforming element (46) which is engaged by the traction transfer means (24).

2. The tensioner according to claim 1, **characterized in that** the deformable element is a deformation tube (42) which is connected with the piston (14), and the deforming element is a displacement member (46) which is connected with the traction transfer means (24) and may penetrate the deformation tube to deform it plastically.

3. The tensioner according to any of the preceding claims, **characterized in that** the deformation tube (42) has a first end, by which it is attached to the piston (14), and a second end comprising a widened portion (44), the displacement member (46) engaging the widened portion (44) in the non-deformed condition.

4. The tensioner according to any of the preceding claims, **characterized in that** the piston (14) is provided with a return stop (34) preventing the piston from being moved back into its rest position after the tensioning process.

5. The tensioner according to claim 4, **characterized in that** the return stop contains several blocking members (34) which may be jammed between the piston (14) and the inner wall of the cylinder (12).

6. The tensioner according to any of the preceding claims, **characterized in that** the traction transfer means (24) extends through the deformation tube (42) and through a bore in the piston (14).

7. The tensioner according to any of the preceding claims, **characterized in that** the traction transfer means (24) is a traction cable.

## Revendications

1. Prétensionneur (10) pour une ceinture de sécurité, comportant un cylindre (12), un piston (14) qui est agencé mobile dans le cylindre, un moyen de transmission de traction (24) qui est relié au piston pour transmettre à la ceinture de sécurité le mouvement du piston, et un entraînement (18) qui peut exercer sur le piston une force d'entraînement pour tendre la ceinture de sécurité, **caractérisé en ce que** le piston (14) est pourvu d'un dispositif de déformation (42, 46) qui présente un élément déformable (42) et un élément déformant (46) sur lequel s'engage le moyen de transmission de traction (24).

2. Prétensionneur selon la revendication 1, **caractérisé en ce que** l'élément déformable est un tube de déformation (42) qui est relié au piston (14) et l'élément déformant est une pièce de déplacement (46) qui est reliée au moyen de transmission de traction (24) et qui peut pénétrer dans le tube de déformation en le déformant plastiquement.

3. Prétensionneur selon l'une des revendications précédentes, **caractérisé en ce que** le tube de déformation (42) présente une première extrémité par laquelle il est fixé au piston (14), et une deuxième extrémité comportant un évasement (44), la pièce de déplacement (46) s'engageant dans l'évasement (44) à l'état non déformé.

4. Prétensionneur selon l'une des revendications précédentes, **caractérisé en ce que** le piston (14) est pourvu d'un dispositif automatique de blocage (34) qui empêche qu'après l'opération de tension, le piston puisse de nouveau être ramené dans sa position de repos.

5. Prétensionneur selon la revendication 4, **caractérisé en ce que** le dispositif automatique de blocage contient plusieurs éléments de blocage qui peuvent être serrés entre le piston (14) et la paroi intérieure du cylindre (12).

6. Prétensionneur selon l'une des revendications précédentes, **caractérisé en ce que** le moyen de transmission de traction (24) s'étend à travers le tube de déformation (42) et à travers un perçage dans le piston (14).

7. Prétensionneur selon l'une des revendications précédentes, **caractérisé en ce que** le moyen de transmission de traction (24) est un câble de traction.
